# EUROPÄISCHE PATENTANMELDUNG

(11) **EP 1 132 582 A1**
(43) Veröffentlichungstag der Anmeldung: **12.09.2001**
(21) Anmeldenummer: 00105061.6
(22) Anmeldetag: 09.03.2000
(51) Int. Cl.: F01N 3/022, F01N 3/027

(54) **Filter zum Entfernen von Russ- und Aschepartikeln aus dem Abgasstrom eines Dieselmotors**

(71) Anmelder: HJS Fahrzeugtechnik GmbH & Co., 58706 Menden (DE)
(72) Erfinder: Hüthwohl, Georg, Dr.-Ing., 59494 Soest (DE); Koll,Jochen, Dipl.-Ing., 59755 Arnsberg (DE); Kohberg, Carsten, Dipl.-Ing., 58706 Menden (DE)
(74) Vertreter: Schröter & Haverkamp

(57) **Zusammenfassung**

Ein Filter zum Entfernen von Ruß- und Aschepartikeln aus dem Abgasstrom eines Dieselmotors (Dieselpartikelfilter) mit einem in ein Filtergehäuse 4 eingesetzten Filterkörper 3 aus einzelnen in Hauptströmungsrichtung des Abgasstromes hintereinander angeordneten, Filtertaschen bildenden Filterplatten F, ist dadurch bestimmt, daß der Filterkörper 3 durch den ungereinigten Abgasstrom dergestalt anströmt ist, daß die Hauptströmungsrichtung im Bereich des Filterkörpers 3 in radialer Richtung von außen nach innen verläuft und der gereinigte Abgasstrom aus dem Inneren des Filterkörpers 3 herausströmend vorgesehen ist, und daß das Filtergehäuse 4 einen mit einem lösbaren Verschlußmittel 7 verschlossenen Auslaß im Bereich seines Tiefsten zum Entleeren von von den angeströmten Filterplattenseiten abgefallen Ruß- und/oder Aschepartikeln aufweist.

## Beschreibung

Die Erfindung bezieht sich auf das Gebiet des Reinigens von Abgasströmen von Brennkraftmaschinen. Insbesondere betrifft die Erfindung ein Filter zum Entfernen von Ruß- und Aschepartikeln aus dem Abgasstrom eines Dieselmotors (Dieselpartikelfilter) mit einem in ein Filtergehäuse eingesetzten Filterkörper aus einzelnen in Hauptströmungsrichtung des Abgasstromes hintereinander angeordneten, Filtertaschen bildenden Filterplatten.

Dieselpartikelfilter werden in den Abgasstrom von Dieselmotoren eingesetzt, um aus dem Abgasstrom die durch den Verbrennungsprozeß entstandenen Ruß- und Aschepartikel durch eine Ablagerung auf der Filterfläche des Filterkörpers zu entfernen. Mit zunehmender Partikelbeschichtung der Filterflächen erhöht sich der Durchströmungswiderstand des Filters und somit der Abgasgegendruck. Aus diesem Grunde ist es erforderlich, das Filter in Abständen von diesen Ablagerungsstoffen zu befreien. Die auf der Filterfläche abgelagerten Rußpartikel können durch Herbeiführen eines Rußabbrandes entfernt werden, wobei ein solcher Rußabbrand entweder selbsttätig durch die Temperatur des Abgases oder durch zusätzliche Brennereinrichtungen ausgelöst wird. Zum Herabsetzen der Zündtemperatur der bei dem Verbrennungsprozeß entstehenden Rußpartikel kann dem Kraftstoff ein Zündpunkt herabsetzendes Additiv beigemengt werden. Dies hat jedoch zur Folge, daß der Ascheanteil im Abgasstrom infolge der durch die Verbrennung zu eingesetzten Additive erhöht ist. Bei einem das Filter reinigenden Rußabbrand werden zwar die auf der Filterfläche befindlichen Rußpartikel beseitigt, eine Entfernung der nicht brennbaren Aschepartikelfilter von den Filterflächen ist durch einen solchen Reinigungsprozeß nicht möglich. Auch die auf der Filterfläche akkumulierten Aschepartikel erhöhen mit zunehmender Betriebsdauer des Dieselmotors den Durchströmungswiderstand. Dieselpartikelfilter müssen daher in Abständen auch von den Aschepartikeln befreit werden. Zu diesem Zweck bedient man sich eines Waschprozesses, bei dem die aus der Abgasanlage eines Kraftfahrzeuges ausgebauten Filterkörper zum Entfernen der Aschepartikel gewaschen werden. Eine solche Reinigung von Dieselpartikelfiltern hat aus diesem Grunde einen nicht unerheblichen Aufwand zur Folge.

Ausgehend von diesem diskutierten Stand der Technik liegt der Erfindung daher die Aufgabe zugrunde, einen Dieselpartikelfilter der eingangs genannten Art dergestalt weiterzubilden, daß dieser auf bedeutend einfachere Weise gereinigt werden kann.

Diese Aufgabe wird erfindungsgemäß dadurch gelöst, daß der Filterkörper durch den ungereinigten Abgasstrom dergestalt anströmt ist, daß die Hauptströmungsrichtung im Bereich des Filterkörpers in radialer Richtung von außen nach innen verläuft und der gereinigte Abgasstrom aus dem Inneren des Filterkörpers herausströmend vorgesehen ist, und daß das Filtergehäuse einen mit einem lösbaren Verschlußmittel verschlossenen Auslaß im Bereich seines Tiefsten zum Entleeren von von den angeströmten Filterplattenseiten abgefallen Ruß- und/oder Aschepartikeln aufweist.

Der erfindungsgemäße Dieselpartikelfilter geht von einer Filterkörperanordnung aus, die durch den ungereinigten Abgasstrom dergestalt angeströmt ist, daß die Hauptströmungsrichtung im Bereich des Filterkörpers in radialer Richtung von außen nach innen verläuft. Somit lagern sich die im Abgasstrom mitgeführten Partikel - Ruß und Asche - auf der Außenseite des Filterkörpers ab. Eine Reinigung des Filterkörpers von den anhaftenden Rußpartikeln erfolgt in herkömmlicher Art und Weise durch Herbeiführen eines Rußabbrandes. Die außenseitige Anströmung des Filterkörpers hat jedoch im Rahmen der Erfindung den besonderen Vorteil, daß infolge der unweigerlich auftretenden Vibrationen beim Betrieb des Dieselmotors von dem Filterkörper Rußpartikel, insbesondere jedoch aber Aschepartikel herabfallen. Diese sammeln sich im Tiefsten des Filtergehäuses an. Zum Entleeren des Filtergehäuses von diesen Aschepartikelansammlungen ist im Bereich des Tiefsten in dem Filtergehäuse ein Auslaß vorgesehen, der mit einem lösbaren Verschlußmittel verschlossen ist. In vorbestimmten Zeitabständen können die angesammelten Aschepartikel ohne große Mühe aus dem Filtergehäuse dadurch entfernt werden, daß das Verschlußmittel geöffnet und der Dieselmotor zum Erzeugen eines Reinigungsstromes angelassen wird. Die im Tiefsten angesammelten Aschepartikel werden dann selbsttätig durch den Auslaß heraus geblasen. Auch möglich ist ein kontinuierlicher oder diskontinuierlich öffnender Bypass, so daß die Asche automatisch aus dem Aschekasten ausgeblasen wird. Dies ist möglich, wenn durch den kleinen Bypass nur so wenig Feststoffe entweichen, daß der Abgasgrenzwert hinsichtlich der Partikelemission nicht überschritten wird.

Bei dem Dieselpartikelfilter gemäß der Erfindung wird die vibrationsbedingte Selbstbefreiung des Filterkörpers von anhaftenden Partikeln ausgenutzt, um die vom Filterkörper abgefallenen Aschepartikel aus dem Filtergehäuse entfernen zu können.

Zur Verlängerung der Entleerungsintervalle ist bei einer bevorzugten Ausgestaltung vorgesehen, dem Filtergehäuse ein Partikelsammelbehältnis zuzuordnen, in dem eine bestimmte Ruß- und/oder Aschepartikelmenge angesammelt werden kann, ohne daß wesentliche Teile dieser Partikel bei einem Betrieb des Dieselmotors aufgewirbelt und sich erneut auf den Filterflächen absetzen können. Zweckmäßigerweise ist das Filterbehältnis Teil des Filtergehäuses und zum Tiefsten des Filtergehäuses hin verjüngt ausgebildet. Die vom Filterkörper abfallenden Ruß- und Aschepartikel fallen schwerkraftsbedingt in den Partikelsammelbehältnis und können von diesem durch Öffnen des zweckmäßigerweise im Tiefsten des Partikelsammelbehältniss befindlichen Verschlußmittels herausgeblasen werden. In diesem Zusammenhang bewirkt die verjüngte Ausbildung eines solchen Partikelsammelbehältnisses, daß keine größeren Strömungsschattenseiten beim Ausblasen der Ruß- und/oder Aschepartikeln entstehen. Zur verbesserten Trennung des Partikelsammelbehältnisses von dem Filterraum des Filtergehäuses kann ferner vorgesehen sein, daß das Partikelsammelbehältnis durch eine siebartige, die Ruß- und Aschepartikel durchlassende Abdeckung, beispielsweise ein Gitter abgetrennt ist.

In dem Partikelsammelbehältnis kann ein Heizstift, etwa eine Glühkerze eingesetzt sein, damit in Zeitabständen auch in dem Partikelsammelbehältnis ein Rußabbrand zum Reduzieren der in dem Partikelbehältnis befindlichen Partikelmenge herbeigeführt werden kann.

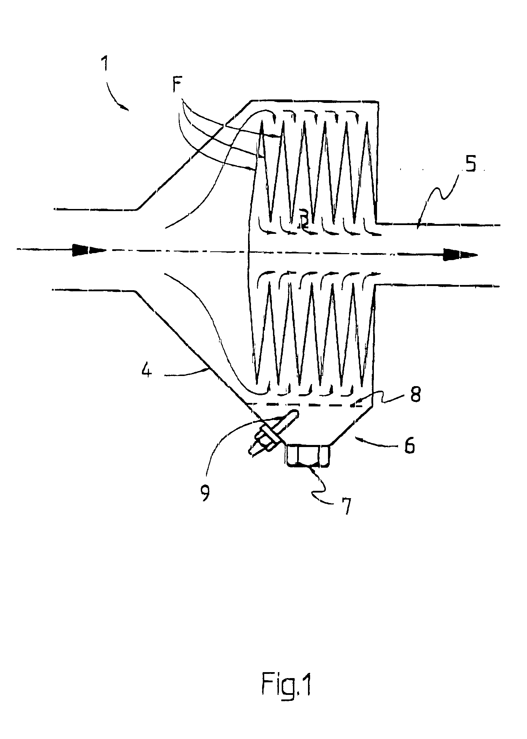

Weitere Vorteile der Erfindung sowie Ausgestaltungen sind Bestandteil der übrigen Unteransprüche sowie der nachfolgenden Beschreibung eines Ausführungsbeispieles unter Bezugnahme auf die beigefügte **Figur 1,** die in einem schematisierten Längsschnitt einen Dieselpartikelfilter zeigt.

Ein Dieselpartikelfilter 1 ist in den Abgasstrom eines nicht näher dargestellten Dieselmotors eingeschaltet. Die Hauptströmungsrichtung des Abgases ist durch den Pfeil 2 gekennzeichnet. Der Dieselpartikelfilter 1 umfaßt einen aus einzelnen Filterplatten F aufgebauten Filterkörper 3, der in einem Filtergehäuse 4 angeordnet ist. Die Hauptströmungsrichtung des Abgasstromes im Bereich des Filterkörpers 3 ist radial von außen nach innen vorgesehen. Innenseitig sind die durch die Filterplatten F gebildeten Filtertaschen an ein Abgasrohr 5 zum Abführen des gereinigten Abgases angeschlossen.

Im Bereich des Tiefsten des Filtergehäuses 4 ist ein Partikelsammelbehältnis 6 als Teil des Filtergehäuses 4 angeordnet. Das Partikelsammelbehältnis 6 erstreckt sich über die gesamte Länge des Filtergehäuses 4 und befindet sich somit unterhalb des Filterkörpers 3. Im Zuge von unvermeidlichen Vibrationen des Dieselpartikelfilters 1 und somit auch des Filterkörpers 3 bei einem Betrieb des Dieselmotors fallen auf der Filterfläche der Filterplatten F anhaftende Ruß- und Aschepartikel durch die Vibrationen gelöst der Schwerkraft folgend herab. Aufgefangen werden diese herabfallende Partikel von dem Partikelsammelbehältnis 6. Das Partikelsammelbehältnis 6 ist nach unten hin verjüngt ausgebildet und im Bereich seiner tiefsten Stelle durch eine einen Auslaß verschließende Verschlußschraube 7 verschlossen. Zur besseren Abtrennung des Partikelsammelbehältnisses 6 von dem Filterraum, in dem sich der Filterkörper 3 befindet, ist das Partikelsammelbehältnis 6 oberseitig durch ein feines Gitter 8 begrenzt. Die Maschenweite des Gitters 8 ist ausreichend, daß herabfallende Ruß- und Aschepartikel durch die Gittermaschen hindurch in das Partikelsammelbehältnis 6 hineinfallen können. Die in dem Partikelsammelbehältnis 6 angesammelten Partikel, insbesondere Asche ist zudem durch das Gitter 8 vor einer erneuten Aufwirbelung bei einem Betrieb des Dieselmotors durch den in den Filterraum eintretenden Abgasstrom weitestgehend geschützt.

In dem Partikelsammelbehältnis 6 ist ferner eine Glühkerze 9 angeordnet, die in bestimmten Zeitabständen eingeschaltet wird, um die in dem Partikelsammelbehältnis 6 angesammelten Rußpartikel abbrennen zu können. Das Abbrennen der Rußpartikel in dem Partikelsammelbehältnis 6 führt zu einer Beseitigung der Rußpartikel, so daß die Aufnahmekapazität für anfallende Aschepartikel vergrößert ist.

Das Partikelsammelbehältnis 6 kann durch Aufschrauben der Verschlußschraube 7 entleert werden, wobei nach einem Entfernen der Verschlußschraube 7 die Aschepartikel quasi von selbst herausrutschen. Zur Unterstützung des Entleerungsprozesses kann der Dieselmotor eingeschaltet werden, so daß der in den Filterraum eintretende Abgasstrom zusätzlich zum Herausfördern der Aschepartikel dient.

Aus der Beschreibung der Erfindung wird deutlich, daß es zur Verwirklichung der Erfindung wesentlich ist, daß das Gehäuse des Dieselpartikelfilters einen mit einem Verschlußmittel verschlossenen Auslaß aufweist, durch den angesammelte Aschepartikel aus dem Filtergehäuse entfernt werden können. Zudem ist es vorteilhaft, eine Falle für die Aschepartikel, wie beispielsweise durch das Partikelsammelbehältnis 6 bereitgestellt, vorzusehen, in dem von den Filterflächen abgefallene Aschepartikel angesammelt werden können, ohne daß diese bei einem Betrieb des Dieselmotors durch das in den Filterraum einströmende Abgas wieder aufgewirbelt und den Filterflächen zugeführt werden.

Der erfindungsgemäße Dieselpartikelfilter kann mit einer Brennereinrichtung zum Zuführen von Heizgas zum Auslösen eines Rußabbrandes des Filterkörpers ausgestattet sein.

### Zusammenstellung der Bezugszeichen

- 1: Dieselpartikelfilter
- 2: Pfeil, Hauptströmungsrichtung
- 3: Filterkörper
- 4: Filtergehäuse
- 5: Abgasrohr
- 6: Partikelsammelbehältnis
- 7: Verschlußschraube
- 8: Gitter
- 9: Glühkerze

- F: Filterplatte

## Patentansprüche

1. Filter zum Entfernen von Ruß- und Aschepartikeln aus dem Abgasstrom eines Dieselmotors (Dieselpartikelfilter) mit einem in ein Filtergehäuse (4) eingesetzten Filterkörper (3) aus einzelnen in Hauptströmungsrichtung des Abgasstromes hintereinander angeordneten, Filtertaschen bildenden Filterplatten (F), **dadurch gekennzeichnet, daß** der Filterkörper (3) durch den ungereinigten Abgasstrom dergestalt anströmt ist, daß die Hauptströmungsrichtung im Bereich des Filterkörpers (3) in radialer Richtung von außen nach innen verläuft und der gereinigte Abgasstrom aus dem Inneren des Filterkörpers (3) herausströmend vorgesehen ist, und daß das Filtergehäuse (4) einen mit einem lösbaren Verschlußmittel (7) verschlossenen Auslaß im Bereich seines Tiefsten zum Entleeren von von den angeströmten Filterplattenseiten abgefallen Ruß- und/oder Aschepartikeln aufweist.

2. Filter nach Anspruch 1, **dadurch gekennzeichnet, daß** der Auslaß einem Partikelsammelbehältnis (6) als Teil des Filtergehäuses (4) zum Auffangen von von den angeströmten Filterplattenseiten abgefallen Ruß- und/oder Aschepartikeln zugeordnet ist.

3. Filter nach Anspruch 2, **dadurch gekennzeichnet, daß** das Partikelsammelbehältnis (6) zum Tiefsten des Filtergehäuses (4) hin verjüngt ausgebildet ist und im Bereich des Tiefsten das Verschlußmittel (7) angeordnet ist.

4. Filter nach Anspruch 3, **dadurch gekennzeichnet, daß** das Verschlußmittel eine Verschlußschraube (7) ist.

5. Filter nach einem der Ansprüche 1 bis 4, **dadurch gekennzeichnet, daß** das Partikelsammelbehältnis (6) durch eine siebartige Ruß- und Aschepartikel durchlassende Abdeckung (8) von dem Filterraum des Filters (1) getrennt ist.

6. Filter nach einem der Ansprüche 1 bis 5, **dadurch gekennzeichnet, daß** in dem Partikelsammelbehältnis (6) ein Heizstift (9) zum Entzünden von in dem Partikelsammelbehältnis (6) befindlichen Rußpartikeln vorgesehen ist.

7. Filter nach einem der Ansprüche 1 bis 6, **dadurch gekennzeichnet, daß** als Verschlußmittel ein ansteuerbarer Bypass zum kontinuierlichen oder diskontinuierlichen Öffnen des Auslasses vorgesehen ist.
